# EUROPEAN PATENT APPLICATION

(11) **EP 1 439 627 A1**
(43) Date of publication of application: **21.07.2004**
(21) Application number: 04250218.7
(22) Date of filing: 16.01.2004
(51) Int. Cl.: H02K 11/00, H01F 1/01, H01R 43/10

(54) **Integrated slip-ring with sense magnet**

(30) Priority: 17.01.2003 US 346925
(71) Applicant: Morganite Incorporated, Dunn, NC 28334 (US)
(72) Inventor: Southall, Otway Archer, Farmville Virginia 23901 (US); Farthing, Alvin Leon, Roseboro North Carolina 28382 (US); Shull, Dan L., Cameron North Carolina 28326 (US)
(74) Representative: Weston, Robert Dale

(57) **Abstract**

Disclosed is a slip-ring (10, 34) comprising an electrically-conductive shell (14) and an integral sense magnet and electrically-insulative core (12, 20) positioned thereagainst, wherein there is a chemical bond between sense magnet (12) and core (14) components; in a preferred method of manufacture, a magnet powder and a thermoset resin binder are mixed and compressed into a magnet pre-form (12), which is placed with an electrically-conductive shell (14) in a mould and an electrically-insulative, phenolic resin material is injected, under high pressure and temperature, into the mould to cure and chemically-bond with the magnet pre-form and form the integral sense magnet and core (12, 20).

## Description

### Field of the Invention

This invention relates to electrical slip-rings for use with AC and DC electric motors (hereinafter referred to as "electrical contact rotors") and to methods of manufacturing such slip-rings; The present invention particularly relates to electrical contact rotors incorporating sense magnets.

### Background of the Invention

To diagnose problems and to gauge and control the operating characteristics of brush-type alternating current (AC) or direct current (DC) electric motors, motor manufacturers and users have resorted to a variety of sensing methods, including optical encoders (which can add cost to the motor) and estimations based upon back electromotive force ("EMF") from the rotor (which are usually not entirely accurate).

Magnets have also been incorporated into the motor assembly to provide feedback on motor function. A magnet is typically mounted on the rotor shaft and coupled with a variable reluctance ("VR") sensor or a Hall-Effect sensor. Such a sensor arrangement costs less than optical encoders and is more accurate than back EMF detection. Using conventional manufacturing methods, however, incorporation of a magnet into the motor assembly results in handling of additional components and addition of steps to the manufacturing process. Both of these factors increase the manufacturing costs of motors having motor function sensing capabilities.

In addition to increased motor costs, traditional methods of incorporating a sense magnet into the motor assembly, generally by gluing the magnet onto the rotor shaft or by pressing the magnet onto a knurl located on the rotor shaft, have proven ineffective to retain the magnet in the motor housing, thereby leading to failure of the sensing device. When the shaft rotates at high revolutions per minute (rpm), the glue bond oftentimes is insufficient to retain the magnet on the shaft. Alternatively, the magnet can disengage from the knurl during operation of the motor. The improperly-secured magnets can lead to the magnet breaking away from the shaft. The magnets are therefore unable to relay flux lines to the sensors and thereby facilitate the collection of information regarding motor function.

### PRIOR ART

Document-A-WO 03/017450, published 27 February 2003, discloses "A motor commutator 10 is equipped with a magnet 16 for inclusion in a sensor assembly for detecting and diagnosing motor inefficiencies and problems as well as in adjusting motor parameters to impact motor operation. The commutator comprises a shell 12, an insulating core 14 positioned adjacent the shell, and at least one magnet positioned adjacent the core. Magnetic sensors placed within the motor housing detect and read the flux lines emitted from the magnet on the commutator. The magnet is chemically bonded with the commutator, thereby facilitating its retention in the motor housing, and is preferably manufactured from an electrically-insulative material and therefore does not impact, in and of itself, the operation of the motor. This document was published after the priority date, 17 January 2003, claimed for this Application.

Document-US-B1-6,236,136 is directed to simultaneously moulding an electrically-conductive material (e.g. a carbonaceous commutator) with an electrically-insulating core (e.g. of phenolic resin) to chemically bond one with the other. There is no discussion of moulding magnets.

Document US-B1-6,278,269 is directed to "Magnetic structure comprising a magnetically permeable concentrator and a magnetic element securely affixed to the concentrator by an interference fit......". A magnetic concentrator is defined as "any ferrous magnetic material used to attract magnetic lines of force".

Document JP-A-11308812 directed towards moulding a commutator about a preformed magnet.

### Object of the Invention

The present invention solves the problems of previous motor sensing assemblies by providing slip-rings having an integral sense magnet for use in detecting and diagnosing motor inefficiencies and problems as well as in adjusting motor parameters to impact motor operation. Magnetic sensors placed within the motor housing detect and read the flux lines emitted from the magnet on the commutator.

### Statement of Invention

According to the present invention a slip-ring comprises an electrically-conductive shell and an integral sense magnet and electrically-insulative core positioned adjacent the shell; wherein there is a chemical bond between sense magnet and core components.

In a preferred embodiment of the present invention, the core component comprises an electrically-insulative, phenolic resin material and the sense magnet component comprises an electrically-insulative mixture of a magnetic powder and a thermoset resin binder.

Also according to the present invention, a method of manufacturing a slip-ring comprises providing an electrically-conductive shell, positioning an integral sense magnet and electrically-insulative core adjacent the shell and moulding and chemically-bonding sense magnet component and a core components.

A preferred method of the present invention, comprises:-
a. mixing a magnet powder and a thermoset resin binder to form a powder mixture and compressing the powder mixture into a magnet pre-form;
b. placing the magnet pre-form and the shell in a mould; and,
c. injecting, under high pressure and temperature, an electrically-insulative, phenolic resin material into the mould to cure and chemically-bond with the magnet pre-form and form the integral sense magnet and core.

The sense magnet is preferably a substantially continuous or discontinuous magnet ring that is integral with and chemically-bonded to the slip-ring, thereby facilitating its retention in the motor housing. The sense magnet is then magnetized with an array of magnetic North and South poles depending on the need of the application.

Because the sense magnet is preferably manufactured from an electrically-insulative material, it does not impact, in and of itself, the operation of the motor. Rather, the output from the sensors of the magnitude and/or frequency of the magnetic poles can be used to determine operating characteristics of the motor (such as speed, angular position, acceleration, etc.) and thereby allow the user to detect and diagnose problems in the motor and adjust parameters (such as current) of the motor to impact its operation and performance.

Moreover, the preferable placement of the sense magnet on the end face of a slip-ring:-
(1) reduces interference between the sense magnet and the sensor;
(2) distances the sense magnet from the armature and stator to reduce the risk of the sensor inadvertently sensing the fields produced by the armature and stator;
   and,
(3) allows placement of the sensor relative to the sense magnet to optimally balance the sensor position and the strength of the magnetic field produced by the magnet. Inclusion of a sense magnet in this way thereby transforms the slip-ring into a more powerful diagnostic and monitoring tool.

The above and other features of the present invention are illustrated by way of example in the following description and drawings.

### Brief Description of the Drawings

FIG. 1 is a perspective view of one embodiment of the slip-ring according to the present invention.
FIG. 2 is another perspective view of the embodiment of the slip-ring of FIG. 1.
FIG. 3 is a cross-sectional view taken at line 3-3 of FIG. 1.
FIG. 4 is a perspective view of an alternative embodiment of the slip-ring according to the present invention.
FIG. 5 is another perspective view of the embodiment of the slip-ring of FIG. 4.
FIG. 6 is a cross-sectional view taken at line 6-6 of FIG. 4.

### Detailed Description of the Drawings

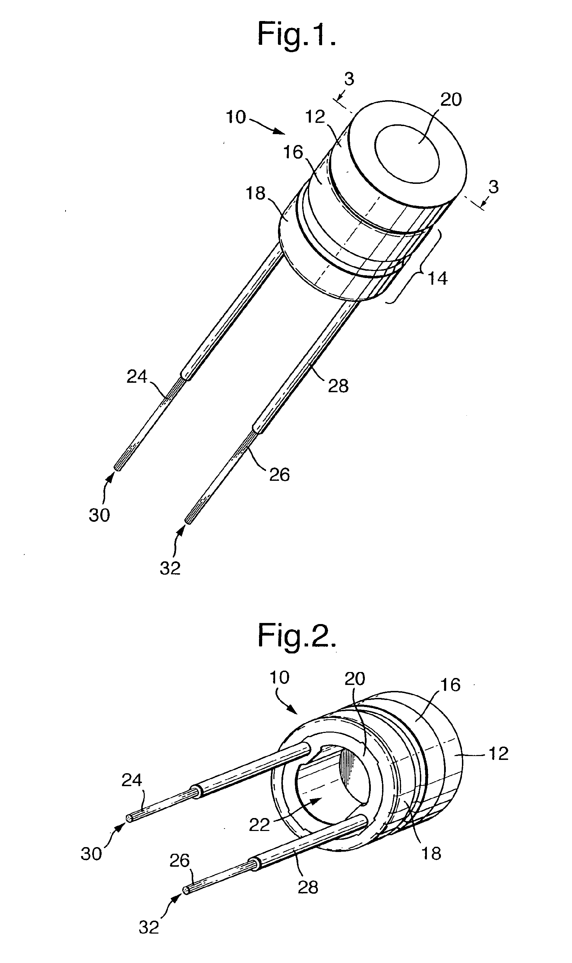

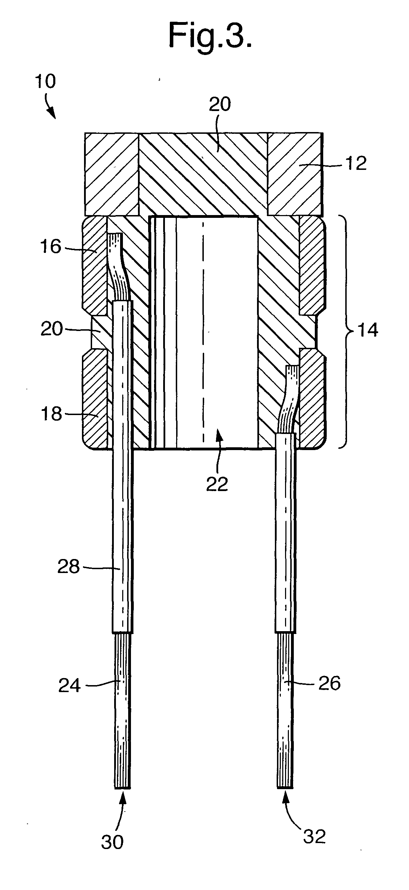

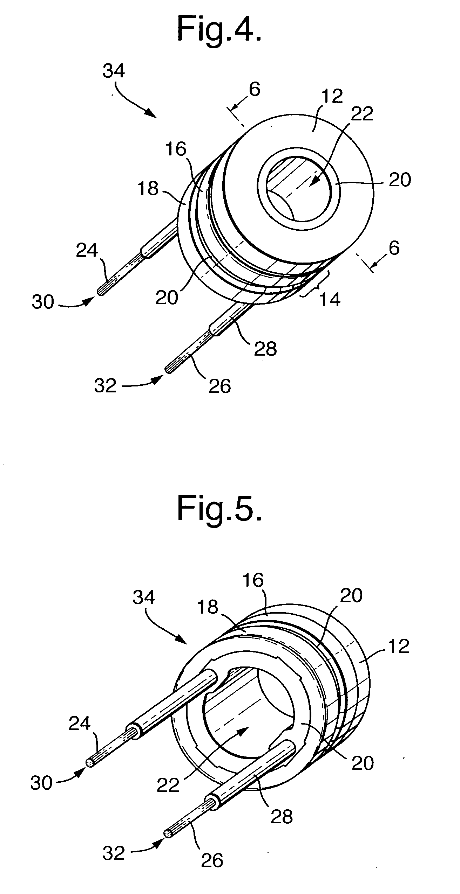

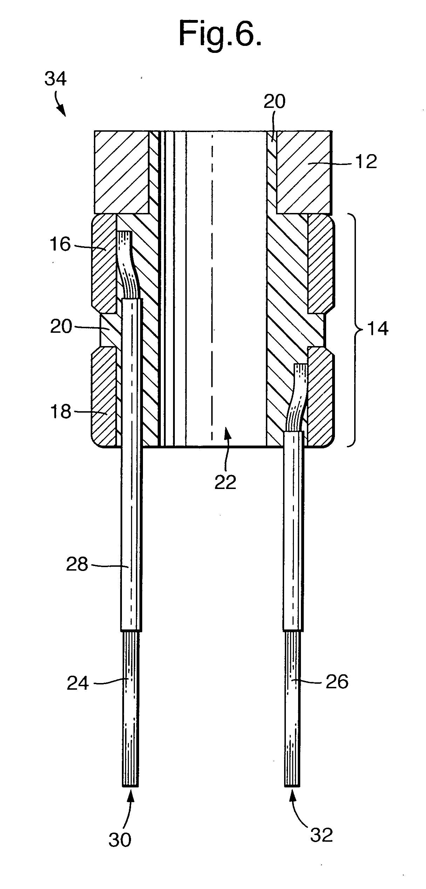

FIGS. 1-3 respectively provide two perspective views and a cross-sectional view of an embodiment of an exemplary slip-ring 10 according to this invention in which a magnet 12 is integrally-formed with the slip-ring 10. Similarly, FIGS. 4-6 respectively provide two perspective views and a cross-sectional view of an alternative embodiment of an exemplary slip-ring 34 according to this invention in which a magnet 12 is integrally-formed with the slip-ring 34. FIGS. 1-3 and FIGS. 4-6 use identical reference numbers to identify identical structure in each illustrated embodiment of the slip-ring. For ease of discussion and unless otherwise indicated, reference to FIGS. 1-3 has predominantly been made to describe the structure of one embodiment of the slip-ring of this invention. However, as described below, numerous alternative embodiments of the slip-ring exist and such reliance on FIGS. 1-3 is in no way intended to limit the scope of this invention.

A slip-ring provides a path for current that can be used to power a rotating member or for data collection. One embodiment of the slip-ring 10 of this invention includes an electrically-conductive shell 14, preferably formed with continuous rings 16, 18 made from copper or any suitable metal, an electrically-insulative core 20 defining a central bore 22 for mounting the slip-ring 10 on a spindle or shaft, and at least one multi-pole magnet 12 exposed on either or both of the end face and outer diameter wall of the slip-ring 10. The bore 22 may be blind, extending partially through the slip-ring 10 (as shown in FIGS. 1 and 2) or a through bore, extending entirely through the slip-ring 34 (as shown in FIGS. 4 and 5); depending on the application of the slip-ring. A wire lead 24, 26, preferably, but not necessarily, insulated, such as by a sheath 28 of suitable insulating material, such as plastic, is secured to each respective shell ring 16, 18, one to transmit current to, and one to transmit current from, a rotating member (not shown). Rings 16, 18 are insulated from each other by core material 20 to provide a single path for current flow to and from the slip-ring.

The magnet 12 may be made from a so-called "green" pre-form mixture of magnet powder and thermo-set resin binder, which is subsequently heated and/or compressed and/or otherwise cured to form the final magnet. The magnet powder may be of any magnet material. Electrically-insulative material magnet materials, such as strontium ferrite (SrFe) or barium ferrite (BaFe), however, have proved especially useful in this application. The magnet 12 is preferably formed by compressing the powder mixture into a mould, which may be performed under no or minimal heat. While the magnet 16 may be moulded into any shape, because slip-rings are cylindrical, a continuous magnet ring is preferable. Although FIGS. 1-6 illustrate a continuous magnet ring 12, the magnet may also be a solid disc (not shown). Moreover, the slip-ring 10 may be equipped with multiple magnets and is not limited to a single magnet. The magnet or magnets may be magnetized with an array of magnetic poles on the outer diameter, the top face, or both.

The core 20 is made of electrically-insulative material, typically (although not necessarily) phenolic, and defines a central bore 22 for receiving a spindle or shaft in use.

The magnet pre-form 12 and shell 14, with associated leads 24, 26, are first positioned within a slip-ring mould. The phenolic core 20 is injection-moulded into the mould. The moulded core 20 intimately contacts the already-placed magnet pre-from 12. The high pressures and temperatures used to mould the core 20 result in both a chemical and mechanical bond between the core 20 and magnet 12. During moulding, the resin in the core 20 cross-links with the resin in the magnet 12 to chemically bond the magnet 16 to the core 14. In this way, the magnet 12 ceases to be a separate component, but rather is integrally-formed with the core. The act of such moulding embeds portions of the leads 24, 26 within the core 20, thereby securing their position relative to the shell 14. Such moulding can also result in the mechanical interlock of features, i.e. protrusions and cavities (not shown) on the adjoining surfaces of the core 20 and magnet 22 or possibly created by at least slight deformation of either or both components during the moulding process.

Instead of pre-forming the magnet powder mixture into the magnet, the powder mixture could simply be poured directly into the mould.

In an alternative embodiment of the slip-ring (not shown), the magnet and core are not two distinct components. Rather, both are formed simultaneously of a magnet powder and thermoplastic resin binder. During manufacture of this embodiment, the shell, with associated leads, is first positioned in the slip-ring mould. The magnet/thermoplastic material, the "magnet core", is then injection-moulded into the mould. The act of such moulding embeds portions of the leads within the magnet core, thereby securing its position relative to the shell.

Moreover, the high pressures and temperatures used to mould the magnet core into the shell result in a mechanical bond between the magnet core and the shell at their interface. During moulding, features, i.e. protrusions and cavities (not shown) on the adjoining surfaces of the magnet core and shell or possibly created by at least slight deformation of either or both components during the moulding process mechanically interlock, which functions further to secure the magnet core within the shell and integrally-form the magnet with the slip-ring. After formation, any portion of the magnet core, but preferably the exposed outer diameter and end face may be magnetized with an array of magnetic poles.

Sensors may then be used in combination with the slip-rings 10, 34 of the present invention to detect and read the flux emitted from the magnet 12. While any sensor capable of detecting and reading flux may be used, magnetic sensors, such as Hall-Effect sensors, VR sensors, or inductive sensors are particularly well-suited in this application. Because the magnets 12 are preferably of an electrically-insulative material, they do not impact, in and of themselves, the operation of the motor. Rather the output from the sensors can be used to determine operating characteristics of the motor, such as speed, angular position, acceleration, etc. and thereby allow the user to detect and diagnose problems in the motor and adjust parameters, such as current, of the motor to impact its operation and performance.

## Claims

1. A slip-ring comprising:
a. an electrically-conductive shell (14);
b. an electrically-insulating core (20) positioned adjacent the shell;
c. at least one sense magnet (12) positioned adjacent the core
**characterised by:-**
d. an integral sense magnet and core (12, 20) having a chemical bond between sense magnet (12) and core (20) components.

2. A slip-ring as claimed in claim 1 and further **characterised in that** the shell (14) comprises copper or graphite.

3. A slip-ring as claimed in claim 1 or claim 2 and further **characterised in that** the core component (20) comprises an electrically-insulative, phenolic resin material.

4. A slip-ring as claimed in any of claims 1 to 3 and further **characterised in that** the sense magnet component (12) comprises an electrically-insulative mixture of a magnetic powder and a thermoset resin binder.

5. A slip-ring as claimed in any of claims 1 to 4 and further **characterised in that** the magnetic powder comprises strontium ferrite or barium ferrite.

6. A slip-ring as claimed in any of claims 1 to 5 and further **characterised in that** the at least one sense magnet (12) is a continuous or discontinuous ring.

7. A slip-ring as claimed in any of claims 1 to 6 and further **characterised in that** the magnet (12) is exposed on an end face and/or an outer diameter wall of the slip-ring (10).

8. A method of manufacturing a slip-ring comprising:-
a. providing an electrically-conductive shell (14);
b. positioning an electrically-insulating core (20) adjacent the shell;
c. positioning at least one sense magnet (12) adjacent the core;
**characterised by the step of:-**
d. moulding and chemically-bonding a sense magnet component (12) and a core component (20) to form an integral sense magnet and core (12, 20).

9. The method of claim 8 **and further characterised by the steps of:-**
a. mixing a magnet powder and a thermoset resin binder to form a powder mixture and compressing the powder mixture into a magnet pre-form (12);
b. placing the magnet pre-form and the shell (14) in a mould; and,
c. injecting, under high pressure and temperature, an electrically-insulative, phenolic resin material into the mould to cure and chemically-bond with the magnet pre-form and form the integral sense magnet and core (12, 20).

10. The method of claim 9 **and further characterised by the step of** associating leads (24, 26) with the shell (14) prior to moulding.
